# EUROPEAN PATENT SPECIFICATION

(11) **EP 4 426 649 B1**
(45) Date of publication and mention of the grant of the patent: **04.03.2026**
(21) Application number: 22812580.3
(22) Date of filing: 31.10.2022
(51) Int. Cl.: C02F 1/28, C02F 1/78, C02F 3/12, C02F 3/10, C02F 101/30, C02F 1/72, C02F 101/12, C02F 101/36, C02F 3/02

(54) **REMOVAL OF MICROPOLLUTANTS FROM WATER AND INSTALLATION FOR USE THEREIN**
ENTFERNUNG VON MIKROVERUNREINIGUNGEN AUS WASSER UND ANLAGE ZUR VERWENDUNG DABEI
ÉLIMINATION DE MICROPOLLUANTS DANS L'EAU ET INSTALLATION POUR SON UTILISATION

(30) Priority: 03.11.2021 NL 2029624; 03.11.2021 US 202163275006 P
(43) Date of publication of application: 11.09.2024
(73) Proprietor: HaskoningDHV Nederland B.V., 3818 EX Amersfoort (NL); Wageningen Universiteit, 6708 PB Wageningen (NL)
(72) Inventor: DE WILT, Henrik Arnoud, 6709 TG Wageningen (NL); VAN GIJN, Koen, 6702 CL Wageningen (NL); LANGENHOFF, Alette Anna Maria, 6701 AK Wageningen (NL); RIJNAARTS, Hubertus Henricus Martinus, 6521 EH Nijmegen (NL)
(74) Representative: Nederlandsch Octrooibureau
(86) International application number: PCT/EP2022/080379
(87) International publication number: WO 2023/078839

(56) References cited:
- WO-A1-03/078335
- US-A- 5 302 288
- US-A1- 2004 168 989
- US-A1- 2019 023 593
- ORLANDINI ERVIN: "Pesticide removal by combined ozonation and granular activated carbon filtration", 19 December 2018 (2018-12-19), XP093252810, ISBN: 978-1-351-42530-8, Retrieved from the Internet <URL:https://www.epo-ebooks.eblib.com/patron/FullRecord.aspx?p=5628893>
- DE WILT ARNOUD ET AL: "Enhanced pharmaceutical removal from water in a three step bio-ozone-bio process", vol. 138, 1 July 2018 (2018-07-01), AMSTERDAM, NL, pages 97 - 105, XP055928092, ISSN: 0043-1354, Retrieved from the Internet <URL:https://www.sciencedirect.com/science/article/pii/S0043135418302240/pdfft?md5=56c6f57b1cdb25500b1571d88feccba2&pid=1-s2.0-S0043135418302240-main.pdf> DOI: 10.1016/j.watres.2018.03.028

## Description

### FIELD OF THE INVENTION

The invention is in the field of the removal of micropollutants from water, such as the treatment of waste water treatment plant effluent for micropollutant removal or production of water for consumption or industrial use. The invention also relates to an installation for use therein.

### BACKGROUND OF THE INVENTION

Water, such as waste water treatment plant effluent, surface water, industrial waste streams, and the like, commonly contain organic substances from anthropogenic origin (micropollutants), such as pharmaceuticals, pharmaceutically active compounds, pesticides, herbicides, corrosion inhibitors and other organic compounds. These micropollutants jeopardize the aquatic environment, drinking water sources and public health.

Several technologies have been developed for the removal of micropollutants as post-treatment to conventional treatment processes in water purification, such as activated sludge processes. Typically, these technologies comprise the use of an oxidant such as ozone as described in US6824695B2, an adsorbent such as activated carbon as described in EP2147711B1, or biological treatment. Although a selection of micropollutants can be removed by those technologies, these technologies also have major disadvantages as reported by de Wilt et al. "Enhanced pharmaceutical removal from water in a three step bio-ozone-bio process" Water Research 138 (2018) 97-105.

Drawbacks of the use of oxidants such as ozone for micropollutant removal are multiple; there is the issue that ozone gets scavenged also by organic compounds other than the target compounds, which thus requires higher ozone dosages and associated high-energy consumption, commonly between 0.05 to 0.2 kWh/m³, and thereby leaving a high CO₂-footprint. Furthermore, bromate is formed, which is an undesired, potentially carcinogenic compound, and even at levels above surface quality standards or drinking-water quality standards. Also, there is only a limited selection of micropollutants that is abated by ozone treatment. Drawbacks of the use of an adsorbent such as activated carbon for micropollutant removal are also multiple; firstly, there is the high consumption of activated carbon, resulting in high costs and CO₂-footprint, and secondly, there is again a limited selection of micropollutants that is abated by activated carbon treatment. Drawbacks of the use of biological treatment for micropollutant removal are also multiple; these typically come with low micropollutant removal efficiencies, and high biomass retention times are required to acquire a microbial population capable of micropollutant biodegradation. Furthermore, high hydraulic retention times, meaning costly reactors with large volumes and surface footprints, are required to provide sufficient time for the microorganisms to take up the micropollutants from the water.

Attempts to overcome the drawbacks of the use of oxidants such as ozone, adsorbents such as activated carbon, or biological treatment for micropollutant removal mainly focus on the combination of technologies. The following combinations are reported as post-treatment to conventional treatment processes in water purification;
- ozone followed by activated carbon,
- ozone followed by biological treatment,
- activated carbon and biological treatment in a single step such as described in EP0812806B1,
- and biological treatment followed by ozone (Knopp et al. Water Research 100 (2016) 580-592, STOWA 2009-34 and de Wilt et al. Water Research 138 (2018) 97-105).

While such arrangements indeed can result in higher removal efficiencies, the costs, energy consumption and CO₂-footprint are usually also higher. In addition, the amount of ozone and reaction time required in these multistep techniques available in the art lead to the formation of bromates in hazardous concentrations.

In the art there is thus a need to improve the removal of micropollutants from water.

US2019/023593 disclosed is a wastewater treatment process including at least one step of biological oxidation in a biological treatment unit, wherein ozone and an adsorbent compound are introduced, the ozonation and the adsorption each at least being induced upstream of the biological treatment unit, or else in the biological treatment unit, or else downstream of the biological treatment unit, knowing that downstream of the biological treatment unit at most either the introduction of ozone, or the introduction of the adsorbent compound is carried out.

US5,302,288 describes a process for purifying wastewater containing organic and color-causing pollutants, involving three unit processes including a first stage aerobic or anaerobic biophysical treatment, a second stage oxidizer treatment, and a third stage adsorbent contract treatment.

US2004/168989 describes a self-contained, portable water purification system, including (a) an ozone supply, (b) an ozone contact chamber for mixing a contaminated or potentially contaminated water stream with ozone generated by such ozone supply, (c) an ozone destruction unit for destructing ozone contained in the water stream and converting said water stream into an oxygen-rich and ozone-depleted water stream, and (d) a downstream biologically active carbon filter, for receiving such oxygen-rich and ozone-depleted water stream and biologically destructing at least a portion of contaminants contained therein.

WO03/078335 describes methods for providing an improved process for organic sludge treatment, wherein sludge is subjected to a membrane bioreactor and a fraction of sludge in the bioreactor is circulated through pretreatment devices.

### SUMMARY OF THE INVENTION

It was surprisingly found that a broad spectrum of (organic) micropollutants can be removed by the combination of adsorption and biological treatment and subsequent oxidation by carrying out the combination as a biological adsorbent filtration (BAF) only then followed by oxidation treatment (OT), preferably ozone treatment. The present invention therefore relates to a surprising combination of biological, adsorptive and oxidation technologies for the removal of micropollutants from water, which overcomes one or more of the above disadvantages at equal or lower costs, energy consumption and CO₂-footprint. In the BAF - OT order a lower oxidant dose in OT can be accomplished due to the removal of micropollutants and organic matter in the BAF. The efficiency of removal of micropollutants is synergistically increased by performing the BAF treatment using an adsorbent before the OT treatment. In the present order, the BAF is the first step in which micropollutant as well as organic matter are removed.

### EXPLANATION OF FIGURES

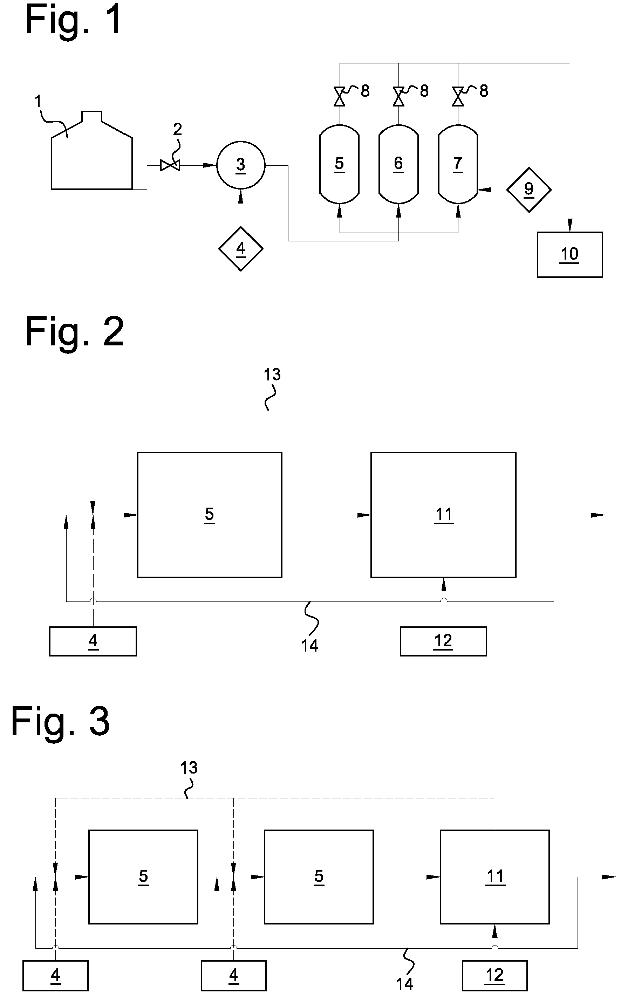

Figure 1 provides a schematic representation of the setup, with three reactors: biological activated carbon (BAC) filter **5,** sand filter (SF) **6** and moving bed bioreactor (MBBR) **7.** The feed was pumped from the feed tank **1** via the 'sampling point'**2** into the pre-aerator **3** where pure oxygen gas was added **4.** From the pre-aerator, the flow was split in three equal parts and pumped into the bottom of the upflow reactors **5, 6** and **7.** All three reactors had the same total volume. The bottom of the BAC filter and the SF consisted of a stabilization layer with gravel and sand. The BAC filter was filled with 1.2 L FILTRASORB^{®} TL830 granular activated carbon (GAC). The SF was filled with 1.2 L sand (0.4-0.8 mm diameter). The MBBR was filled with 0.85 L Kaldness K1 carriers and was continuously aerated with pressurized air **9** to keep the bed moving. The outflow of the three reactors was pumped via the 'sampling points' **8** into the sewer **10.**
Figures 2,3, 4 and 5 display various possible configurations of the present invention.
Figure 2 shows a setup of BAF **5** and OT **11,** with oxygen supply **4** and ozone supply **12,** respectively. The dash line **13** presents the advantageous OT off-gas reuse for aeration purposes in BAF, thus reducing the need for oxygen supply **4** to the BAF. There is also allowed for an adjustable amount of effluent **14** recirculating from OT to BAF again, for the elimination of potentially harmful oxidation products.
In Figure 3 the process of Figure 2 is extended to a series of BAF reactors before the treated water is subjected to OT. Off-gas from the OT reactor can be fed to either or both BAF reactors, and the process allows for an adjustable amount of effluent **14** discharged from OT to be recirculated to the first and/or second BAF reactor.

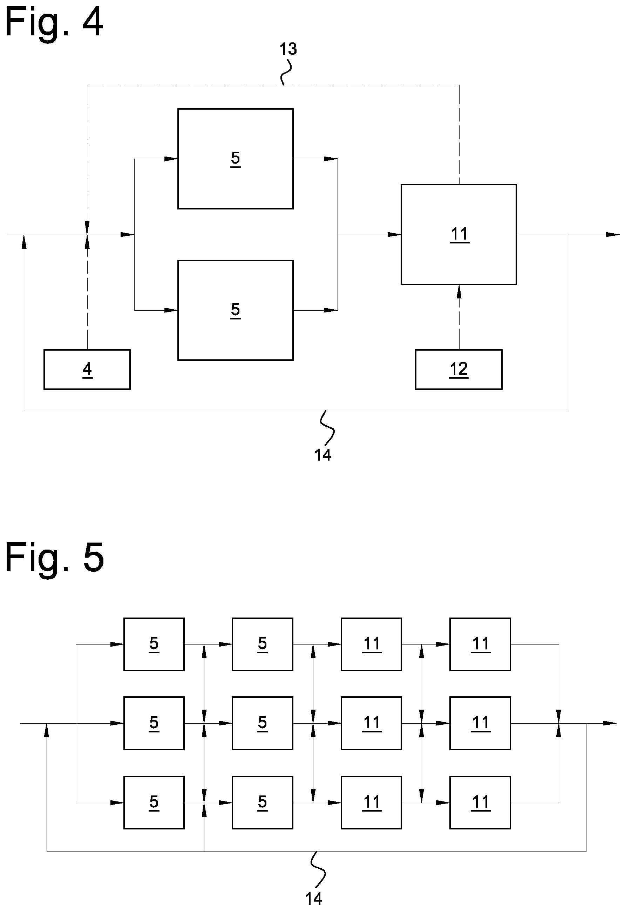

In Figure 4, the process of Figure 2 is extended to multiple BAF reactors working in parallel before the treated water is collected from the BAF reactors and subjected to OT.
Figure 5 is a combination of Figure 3 and 4, extended with a matrix of OT reactors working in parallel and in series.

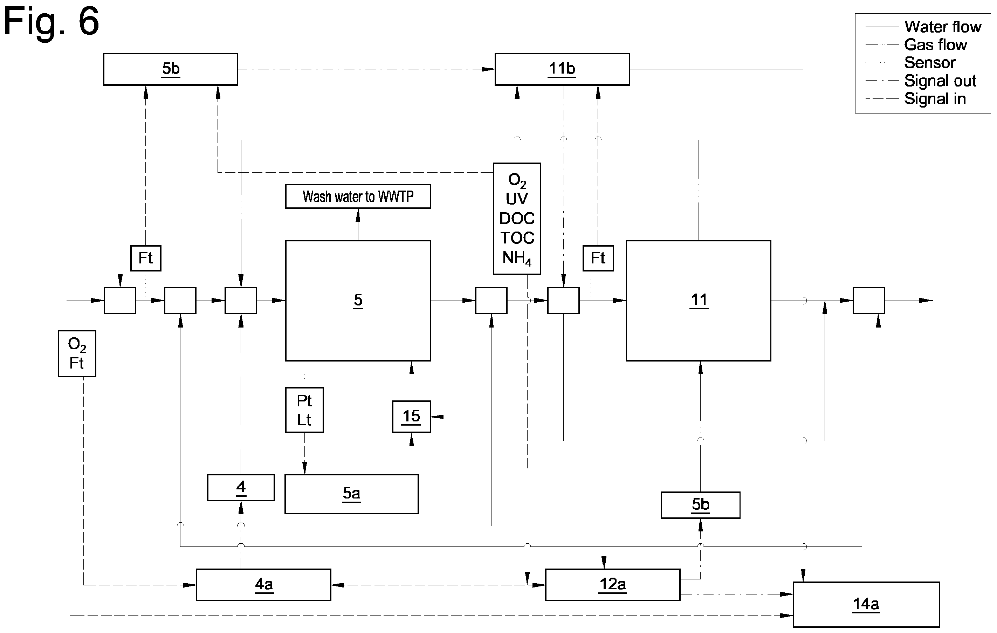

Figure 6 displays a detailed process diagram of the present invention including options for controlling the process (**5b:** control unit for BAF by-pass; **11b:** control unit for OT by-pass), and a washing unit **15** (and a control unit for washing **5a**). There are also drawn control units for oxygen **4a** and ozone **12a,** and a control unit for recirculation **14a.**

### DESCRIPTION OF THE INVENTION

The invention pertains to a process for the removal of organic micropollutants from water, comprising subjecting the water to a consecutive combination of biological adsorbent filtration (BAF) followed by oxidation treatment (OT), preferably ozone treatment, wherein BAF is the first micropollutant removal step, wherein the BAF is a reactor which is provided with a biological adsorbent filter in the form of a bed of adsorbent carrier material upon which microorganisms adhere which degrade the organic micropollutants in the polluted water, wherein the reactor is filled with the adsorbent carrier material to a content of the total reactor volume ranging between 50 - 80%, and wherein the polluted water is led through the bed of adsorbent carrier material, wherein the BAF comprises granular activated carbon (GAC) carrier material which can both adsorb organic micropollutants and provide a surface for microorganisms to grow, wherein the consecutive biological adsorbent filtration (BAF) and oxidation treatment (OT) are preceded by a water or wastewater purification process.

The invention also pertains to an installation suitable for the process according to any one of the preceding claims, comprising one or more BAF reactors (5) in parallel and/or in series, and one or more OT reactors (11) in parallel and/or in series, and wherein the last BAF reactor or last set of parallel BAF reactors has a fluid connection with the first OT reactor or first set of parallel OT reactors, wherein the BAF reactor(s) is(are) provided with a water inlet and an inlet for oxygen, wherein the BAF reactor(s) is provided with a biological adsorbent filter comprising a filter bed, wherein the filter bed contains granular activated carbon (GAC) which can both adsorb micropollutants and provide a surface for microorganisms to grow, wherein the BAF reactor is filled with the GAC to a content of the total reactor volume ranging between 50 - 80%, and the BAF reactor(s) is further provided with a water (overflow) outlet to the OT or to the next BAF reactor in series, and optionally connections for a washing unit 15a, and wherein the OT reactor(s) is(are) provided with a water inlet from the BAF reactor(s) outlet, a water (overflow) outlet, and an inlet for the oxidant and an outlet for the off-gas.

Hence, the invention thus pertains a two-step process and an installation for removing (organic) micropollutants from wastewater, comprising the consecutive combination of a biological adsorbent filtration (BAF) and oxidation treatment (OT), preferably ozone treatment. In the first step (BAF), micropollutants, organic matter and ammonia are partially removed by the combination of adsorptive and biological processes. In the second, subsequent step (OT), micropollutants are further removed by oxidation. In a more preferred embodiment, the process for removing micropollutants from (waste)water essentially consists of BAF and OT steps, more preferably consists of BAF and OT. The process preferably essentially consists of at least one cycle of consecutive steps of BAF and OT.

The (organic) micropollutants are preferably provided to the process in concentrations less than 100 mg/l, more preferably less than 50 mg/l.

In one embodiment, the process for removing (organic) micropollutants is preferably a process for production of water for consumption or industrial use.

In one embodiment, such as depicted in Figure 3, the BAF step may involve a series of multiple BAF reactors, preferably a series of 2-3 BAF reactors. In one embodiment, such as depicted in Figure 4, the BAF step may involve multiple BAF reactors working in parallel, preferably 2-3 BAF reactors working in parallel. A parallel set of BAF reactors is particularly useful when dealing with increased amounts of water to be treated, while a series of BAF reactors is preferred when dealing with increased amounts of micropollutants. In a more preferred embodiment, the BAF step involves multiple BAF reactors in series and in parallel, such as drawn in Figure 5. Likewise, the process may involve a multitude of OT reactors working in series and/or in parallel. The reasons for selecting a plurality of OT reactors in parallel or in series are similar to those given for a plurality of BAF reactors in parallel or in series here above.

The inventors found that the order of the two steps BAF and OT is key. Without wishing to be tied down to any theory, the inventors believe that the efficiency of the oxidation process in the OT is high due to the removal of organic matter in the preceding BAF(s). This explains the observation that this particular combination and order of micropollutant removal treatment is more successful than other combinations tried in the art before. In wastewater, the concentration of effluent organic material is typically three to six orders of magnitudes higher than the concentration of micropollutants. By addressing the effluent organic material concentrations first, the largest part of the treatment capacity of the subsequent oxidation treatment such as ozone treatment more efficiently targets the micropollutants and is not wasted on the effluent organic materials, or at least to a lesser extent. Advantageously, the production of hazardous levels of bromate is controlled.

In a preferred embodiment, all or part of the polluted water may be subjected to multiple cycles, preferably 2-3 cycles, of the above two-step process, i.e. part of the water which has been treated for micropollutants in the consecutive steps of BAF and OT is recirculated to another cycle of BAF-OT. It is preferred to monitor the formation of oxidation products at the end of the OT, and/or for measuring TOC, DOC, SUVA, ammonium, and/or specifically targeted pollutants in or at the end of the BAF, and controlling the amount of BAF-OT treated water which is recirculated to the consecutive steps of BAF and OT based on the output of the monitoring step.

In a preferred embodiment, OT involves ozone treatment, and oxygen in the OT off-gas is used to aerate, or augment the aeration of BAF, thus advantageously saving on oxygen supply.

The water is preferably wastewater containing organic micropollutants, typically with micropollutant concentrations of less than 100 mg/l, more preferably less than 50 mg/l, for example water in waste water treatment plants, hospital wastewater, industrial wastewater or domestic wastewater treatment plant effluent. Micropollutants are generally recognized as organic compounds that either by low concentration and/or chemical substrate are not able to function as a substrate to support degradation coupled to microbial growth in the commonly used biological waste water treatment plants. In the context of the invention, the micropollutants are preferably organic micropollutants. These are typically pharmaceuticals, personal care products, pesticides and corrosion inhibitors, anti-scaling and disinfection chemicals and other low concentration industrial chemicals. The waste water is typically already treated to remove high concentrations of easily degradable bulk organic compounds, yielding wastewater with preferably concentrations less than 100 mg/l, more preferably less than 50 mg/l. More details are given below.

### BAF

Adsorbant filters are widely used for the purification and processing of water and wastewater. Simply put, these filters are created by packing together a bed of rough granules, and the water that is meant to be treated is then run over this filtering bed of assemblage. However, biological adsorbant filters are less common; these involve microorganisms adhered to the adsorbant filter, which microorganisms degrade the organic materials in the water to be treated. The biological adsorbant filtration (BAF) reactor is advantageously filled with the adsorbent to a content of the total reactor volume ranging between 50 and 80%. The water is flowing through the adsorbent material in the BAF. The polluted water is led through the adsorption bed, upon which adheres aerobic biomass next to the adsorption of organic molecules.

The adsorbent, as defined in the introductory part above, which is the filling material of the BAF, is granular activated carbon (GAC). It can both adsorb micropollutants and provide a surface for microorganisms to grow. Biological activated carbon (BAC) technology is developed on the basis of activated carbon technology. It uses the synergistic effect of activated carbon adsorption and biodegradation to treat wastewater, and effectively remove organic matter (especially the biodegradable part). GAC is a form of BAC. A suitable but non-limiting example of a suitable BAC is described in EP0821806.

In embodiments where BAF involves a series of BAF reactors, the process may involve monitoring or controlling means for measuring TOC, DOC, SUVA, ammonium and/or other quality parameters and/or specifically targeted pollutants preferably before BAF, and controlling or adjusting the amount of water over the series of BAF reactors.

The combination of adsorptive properties and hosting a microbial population determines the effectiveness of the BAF in the removal of micropollutants, organic matter measured as total organic carbon (TOC), dissolved organic carbon (DOC) or specific UV absorbance (SUVA), ammonium and other pollutants.

Associated with the first step, the installation for removing micropollutants from water, contains a tank or reactor in which is provided a biological adsorbant filter, in the form of a bed of active carbon granules, upon which aerobic micro-organisms adhere which can degrade organic components including micropollutants, which tank or reactor is provided with an inlet for micropollutant-containing water and with an outlet for treated effluent, which installation further comprises means to supply oxygen-containing gas to the reactor.

### Oxygen concentration in BAF

In an advantageous embodiment of the process and the installation of the invention, the oxygen concentration at the start of the BAF process is in the range of 3 - 25 g/m³ and is preferably in the range of 5 - 22 g/m³, and most preferably is in the range of 7 - 20 g/m³. To obtain a sufficiently high oxygen concentration at the start of the BAF process, oxygen can be injected in the feed of the BAF or into the BAF reactor. Oxygen may be provided with any suitable means.

It has been found that the oxygen concentration at the start of the BAF process in the above range supports and stimulates the growth of microorganisms capable of degrading micropollutants and organic matter, and extends the lifetime of the adsorbent in the BAF (well) beyond its saturation point. It has also been found that the removal of micropollutants and DOC remains stably high after three years of operation and possibly longer. No regeneration of the adsorbent in the BAF is required whereas filter materials such as granular activated carbon are typically regenerated when they reach their saturation point.

### Reuse off-gas OT in BAF

In an advantageous embodiment of the process and the installation of the invention, when the oxidation treatment involves or is ozone treatment, the oxygen-containing off-gas of the OT is reused in the BAF. The gaseous off-gas stream of the OT typically has an oxygen content higher than 90%.

When the oxidation treatment involves or is ozone treatment, depending on the applied ozone dosage in the OT (typically between 1.2 and 12 g O_{3/}m³) and the oxygen content in the ozone gas feed stream of the OT (typically between 85 to 92% oxygen) the oxygen in the OT off-gas preferably provides between 50 and 100% of the required oxygen input into the BAF. The reuse of oxygen in the OT off-gas reduces the amount of oxygen consumption of the BAF-OT process thereby lowering the operational costs and CO₂-footprint of the process.

The first BAF treatment is not preceded by any other micropollutant removal treatment, such as ultrafiltration.

### Retention time and superficial flow velocity

In an advantageous embodiment of the process and the installation of the invention, the hydraulic retention time of the water flow in the BAF is between 5 and 120 minutes, preferably between 10 and 90 minutes, more preferably between 30 and 60 minutes to support the (partial) removal of micropollutants and other pollutants. The superficial flow velocity of the water in the BAF is between 0.1 and 40 m/h, preferably between 0.5 and 20 m/h, more preferably between 1 and 10 m/h. Hydraulic retention time is an important parameter in the biological removal of micropollutants. At too low retention times biological removal is absent or very limited. The hydraulic retention time and superficial flow velocity can be adjusted by regulating the flow into the BAF. The use of buffer prior to the BAF allows regulation of the flow into the BAF. The superficial flow velocity in the BAF is preferably measured at the inlet of BAF. The superficial flow velocity is based on the flow at the BAF inlet divided by the surface of the BAF filterbed (which is a fixed surface), thus providing a flow velocity in the BAF.

### Recirculation of OT to BAF

Disinfectants and toxic compounds may hinder the aerobic microbial activity in the BAF, thus negatively affecting the BAF efficacy. The monitoring step is preferably at the end of the BAF process, at the outlet of the BAF. Incidental undesired events such as the temporal presence of high disinfectant concentrations in the feed water are known to cause hick-ups in biological processes. During such events, the outflow of treated water from the BAF proceeds to the OT, and while the OT can keep up the micropollutant removal, it allows the BAF to recover. However, if the process involves such an incidental undesired event, it is preferred that the OT-water is subsequently recirculated to the BAF-OT process again, thus allowing for at least another BAF step and a set of consecutive BAF and OT steps.

In an advantageous embodiment of the process and the installation of the invention, an adjustable amount of the treated water outflowing the OT is recirculated to the inlet of the BAF and fed to the BAF-OT process again. The adjustable amount preferably ranges between 10 - 100%, more preferably 20 - 90%, more preferably 20 - 80%, most preferably 20 - 50% of the outflow of the OT. The amount of water that is treated in the BAF-OT process and subsequently recirculated to the consecutive steps of BAF and OT again, can be readjusted in order to reduce the micropollutant concentrations and/or possible harmful oxidation products formed in the OT step in the final treated water to the desired extent. The setpoint of the amount of recirculated BAF-OT treated water can be adjusted manually and/or adjusted in a controlled manner. The process may involve monitoring or controlling means for assessing the formation of oxidation products at the end of the OT, and/or for monitoring or controlling means for measuring TOC, DOC, SUVA, bromide, ammonium and/or specifically targeted pollutants, preferably at the inlet or outlet of the BAF. The amount of BAF-OT treated water which is recirculated to the consecutive steps of BAF and OT can be controlled manually or automatically based on the output of the monitoring step. Possibly harmful oxidation products formed in the OT can thus be recirculated to the BAF-OT process, and removed by the process of biological adsorbent filtration.

The absolute output values (e.g. concentrations in mg/L) vary between the different incoming wastewaters as in practice each wastewater is different. Rather, a relative change in output, i.e. % difference compared to a standard value based on historical average or mean is applicable. An example is provided in Table 2; for example, when the relative change in % of TOC, DOC, SUVA, bromide, ammonium and/or specifically targeted pollutants concentration increases and exceeds a predetermined maximally allowed % of change based on the historical average (e.g. per week or per month), between 10 - 100% of the effluent from the OT is recirculated based on the exact concentrations. These maximally allowed % of change in concentrations for recirculation can be defined in phases from low-to-medium-to-high. Dependent on the desired output concentrations after BAF-OT, a low % change (preferably between 0 - 20%) in concentration of the measured parameters may result in e.g. no recirculation to 10% recirculation, medium % change in concentration (preferably between 20 - 40%) result in a recirculation between 10% and 40%, while a high % change (preferably higher than 40%) in concentration would result in 50% - 100% recirculation. Each of these values are quantified and assessed separately and the setpoint of the amount of recirculated BAF-OT treated water can be adjusted manually and/or adjusted in a controlled manner based on these parameters. When the relative change in % of TOC, DOC, SUVA, bromide, ammonium and/or specifically targeted pollutants concentration decreases the recirculation can be adjusted accordingly.

However, it is key that the first micropollutant removal step is BAF. In addition, BAF is also the first step for the removal of organic matter. In one embodiment, the monitoring step is preferably at the end of the BAF process, at the outlet of the BAF. Recirculation can be a continuous process involving a continuous reiteration of BAF-OT cycles where an amount of 5 - 50% of the outflow of the OT step is recirculated. In one embodiment, it is preferred that the water subjected to micropollutant removal is subjected to BAF-OT-BAF-OT.

### OT

In an advantageous embodiment of the process and the installation of the invention, the OT process can be embodied by any possible oxidation process suitable for oxidizing micropollutants in water, preferably wastewater. The OT preferably is ozone treatment. While ozone treatment is most preferred, oxidation after biological adsorbent filtration (BAF) may also be achieved using alternative oxidants like Cl₂, ClO, ClO, ClO₃, H₂O₂, Fenton, Ferrate, or combinations thereof. These oxidants may be used instead but more preferably in addition to ozone treatment. The applied ozone dose is controlled by the TOC and/or DOC and/or SUVA concentration in the outflow of the BAF and/or the water flow into the OT, but also other means of controlling the ozone dose are possible. The skilled person is aware of the conditions of traditionally applied wastewater oxidation treatment to remove micropollutants.

The applied specific ozone dose is preferably between 0.05 and 2.0 g O_{3/}g DOC, preferably between 0.1 and 1.5 g O₃/g DOC, such as between 0.2 and 1.0 g O_{3/}g DOC, and/or between 0.05 and 2 g O_{3/}g TOC, preferably between 0.1 and 1.5 g O₃/g TOC, such as between 0.2 and 1g O₃/g TOC.

### By-pass of OT

In an advantageous embodiment of the process and the installation of the invention, an adjustable amount of the outflow of the BAF may be fed to the OT. In a preferred embodiment, an adjustable amount preferably between 1 - 50%, preferably 5 - 40%, more preferably 10 - 30% of the water discharged from the BAF can skip the OT; the setpoint of the amount can be adjusted manually and/or adjusted in a controlled manner. The amount of BAF-treated water that is allowed to skip OT may be adjusted based on the water quality at the BAF inlet and/or based on the BAF efficacy (the BAF-treated water may have micropollutant levels already reduced to acceptable levels) and/or because of the presence of increased amounts of bromide in the BAF-treated water, thus risking the formation of increased bromate levels in OT. To that end, the process may involve monitoring means for measuring TOC, DOC, SUVA, ammonium, bromide and/or specifically targeted pollutants, and the amount of water that is discharged from the BAF and allowed to skip OT can be controlled automatically or manually based on the output of the monitoring step. These monitoring means are preferably located at the end of the BAF.

### BAF-OT installation

The installation for carrying out the removal of micropollutants of the invention as described here above, comprises one or more BAF reactors 5 in parallel and/or in series, and one or more OT reactors **11** in parallel and/or in series, and wherein the last BAF reactor or last set of parallel BAF reactors has a fluid connection with the first OT reactor or first set of parallel OT reactors. The BAF and OT reactors can be cylindrical tanks or rectangular tanks, but other shapes or even series of multiple differently shaped reactors are perfectly possible. In the context of the invention, the wording 'tank' and 'reactor' are used interchangeably.

The BAF reactor(s) is(are) provided with a water inlet and an inlet for oxygen, the reactor filled with an adsorbent or mixture of adsorbents, a water (overflow) outlet to the OT or to the next BAF reactor in series, and optionally connections for a washing unit **15a.** The BAF(s) can be equipped with one or more sensoring devices, such as sensors for flow, oxygen, TOC, DOC, SUVA, pressure and/or ammonium, bromide and/or other quality parameters and/or specifically targeted pollutants at the water inlet and/or outlet of the BAF and/or level transmitters in the BAF. The OT reactor(s) is(are) provided with a water inlet from the BAF outlet, a water (overflow) outlet, and an inlet for the oxidant and an outlet for the off-gas. If the OT involves ozone, the OT reactor is provided with an inlet for a gaseous ozone mixture. The outlet of the off-gas can be connected to the inlet of oxygen into the BAF. The OT can be equipped with sensoring devices such as sensors for water flow, gas flow and/or oxidant (ozone) concentrations and/or specifically targeted pollutants.

The BAF-OT installation can be equipped with regulating devices to control the water flow and the oxygen flow into the BAF using information from sensors or other measurements on the water flow and/or oxygen concentration, TOC, DOC and/or SUVA and/or specifically targeted pollutants in the water inlet and/or water outlet of the BAF.

### Washing

In an advantageous embodiment of the process and the installation of the invention, the BAF may comprise a washing unit, wherein the washing unit enables a forward washing and/or backwashing and/or other suitable washing step of the BAF by means of flushing water, air or any other suitable substance through the BAF. The washing step may be perpendicular to the water flow (backwash) and/or co-current to the water flow (forward wash), also other flow schemes are very well possible. Suspended solids present in the BAF feed and/or growth of biomass in the BAF can hinder the water flow through the BAF and/or clog the BAF.

### Process control

An important feature of the process and the installation of the invention is the high removal of a broad array of diverse micropollutants which can be achieved by controlling the micropollutant removal and OM removal in the BAF and the micropollutant removal in the OT. This can be done by, for example, controlling the oxygen concentration and OM content (by controlling the TOC-concentration and/or DOC-concentration and/or SUVA) in the feed and outflow of the BAF, the superficial flow velocity and retention time in the BAF, and the specific ozone dose (g O_{3/}g TOC or g O₃/g DOC or g O₃/SUVA) and/or a flow proportional ozone dose (g O₃/m³) in the OT. As also other water constituents like for instance ammonium consume oxygen in the BAF, additionally an ammonium control can be applied. Sensing the ammonium concentration in the feed and outflow of the BAF can be used to control the oxygen input of the BAF. As displayed in Figure 6 also other options for controlling the process are possible, such as controlling the OT by-pass, the oxygen input, the ozone dose in the OT, the recirculation of OT outflow to the BAF inflow and the BAF washing.

The invention can beneficially be used to improve the treatment performance for the purification of municipal and/or industrial wastewater. Typically, such wastewater is treated in biological processes like activated sludge, aerobic granular sludge (Nereda^{®}), MBBR, IFAS, or processes alike and often in combination with chemical/physical treatment steps like clarification, flocculation, filtration, precipitation, or the like. However, also after such conventional wastewater treatment, still a significant concentration of micropollutants remains. To achieve enhanced removal of these micropollutants, the wastewater as purified by such treatment processes (i.e. treated wastewater) is subsequently fed to the process according to the invention. The micropollutant removal process of the invention provides efficient removal of bulk pollutants like organics, nitrogen and phosphorus components to concentrations suitable for discharge into surface water, aquifers or for reuse.

The invention can be beneficial used in the purification of surface water or ground water in the production of drinking water or industrial process water. Typically, such water is purified in a treatment train comprising various chemical, physical and biological treatment processes. The purification process provides an efficient removal of (organic) bulk- and micropollutants , suspended matter, pathogens and alike to concentrations safe enough for use. However, also after such treatment, - compared to bulk pollutants and natural organic compounds very low concentrations but with respect to ecological and human health significant- concentrations of micropollutants remain. To achieve enhanced removal of these micropollutants, the water as purified by such treatment processes is fed into the process according to the invention.

Another example of beneficial use of the invention is in the treatment of brines and concentrate streams as are being produced in the purification of water and wastewater. Such streams are a waste product of treatment processes like membrane filtration, sand filtration, disk filtration, ion exchange, and adsorption. Through these processes micropollutants are removed, at least for a certain amount, from the purified water and as result are concentrated into the waste streams. By treating these waste streams in the invention, micropollutants are removed and the treated water can be returned to the inlet of the main stream water or wastewater purification process.

### COMPARATIVE EXAMPLE

To demonstrate the benefit of the invention (subsequently biological adsorbent filtration (BAF) and oxidation treatment (OT)), the applicant has executed extensive laboratory trials in which the performance of the new process was compared with state-of-art solutions. In these trials, the adsorbent in the BAF was reused granular activated carbon from a drinking water production facility. Under fully controllable and comparable conditions performance as achieved through sand filtration (SF) and a moving bed bioreactor (MBBR) were determined in parallel. Each treatment system was tested in a reactor of equal size, the setup schematically represented in Figure 1.

The test period for comparison of BAF, SF, and MBBR lasted for more than 700 days to allow the full development of microbial communities in the treatment systems. All three reactors were fed at an equal flow rate with the same effluent or a WWTP amended with an equal oxygen concentration of about 20 g/m³ in the feed water. Removal of total organic carbon (TOC), specific UV absorbance (SUVA), and chemical oxygen demand (COD) was measured.

The outflow of BAF and SF were subsequently treated in an ozone treatment reactor. For comparison also the WWTP effluent was tested in the OT. OT involved ozone treatment. A specific ozone dose of 0.4 g O_{3/}g TOC was tested. Removal of a selection of micropollutants was measured.

The results are presented in Table 1.

**Table 1: Test results in terms of removal efficiencies (%)**

| | **BAF** | **BAF-OT** | **SF** | **SF-OT** | **OT** |
|---|---|---|---|---|---|
| Specific ozone dose (g O₃/g TOC) | - | 0.4 | - | 0.4 | 0.4 |
| Metoprolol | 63 | 99 | 39 | 88 | 65 |
| Benzotirazole | 24 | 91 | 2 | 69 | 44 |
| Caffeine | 68 | 96 | 35 | 82 | 48 |
| Carbamezepine | 44 | 98 | 0 | \| 99 | 97 |
| Irbesartan | 16 | 93 | 13 | 79 | 61 |
| Propanolol | 92 | 98 | 38 | 98 | 95 |
| Sulfamethoxazole | -21 | 97 | 17 | 93 | 87 |
| Trimethoprim | 86 | 89 | 33 | 99 | 97 |
| DEET | 28 | 93 | 34 | 79 | 45 |
| Erythromycin | 70 | 100 | 35 | 100 | 95 |
| Atenolol | 80 | 98 | 23 | 79 | 61 |
| 4- and 5-methylbenzotriazole | 71 | 96 | 29 | 81 | 54 |
| BAM | 40 | 82 | 16 | 50 | 8 |
| Clarithromicine | 79 | 100 | 40 | \| 97 | 90 |
| Dimetridazole | 57 | 92 | 19 | 66 | 33 |
| Sotalol | 83 | 100 | 21 | 100 | 99 |
| Diclofenac | 70 | 98 | 11 | 100 | 99 |
| Furosemide | 65 | 99 | 7 | 100 | 100 |
| Mecoprop MCPP | 45 | 90 | 28 | 73 | 53 |
| 2,4-D | 60 | 92 | 38 | \| 81 | 50 |

As can be seen in table 1, the highest removal efficiencies were obtained with the BAF-OT process. It was found that the removal of TOC, SUVA and COD in the BAF was for all parameters at least a factor 2 higher compared to SF and MBBR. Moreover, in comparison to OT or SF-OT, a wider array of micropollutants was removed by BAF-OT to a great(er) extent, demonstrating the benefits of the invention above conventional treatments.

### EXAMPLE

To exemplify the matter and benefits of recirculation to the skilled person, the applicant has illustrated for the process of BAF-OT as carried in the comparative example indicated here above, the values of TOC, DOC, SUVA, bromide, ammonium and/or specifically targeted pollutants on which the amount of recirculation could be based. The absolute output values (e.g. concentrations in mg/L) vary between the different incoming wastewaters as in practice each wastewater is different. Rather, a relative change in output, i.e. % difference compared to a standard value based on historical average or mean should be applied. The decision depends on the type of wastewater and is based on routine experimentation where these values are evaluated and adjusted over time.

**Table 2: Monitoring of effluent from OT with medium relative difference from the average value**

| Parameters | Output value ( **medium** ) | % Recirculation |
|---|---|---|
| TOC | More than 20% but less than 40% off from the historical average value (over last week or month) | ~20% |
| DOC | | |
| SUVA | | |
| Bromide | | |
| Ammonium | | |
| Specifically targeted pollutants | | |

**Table 3. Monitoring of effluent from OT with high relative difference from the average value.**

| Parameters: | Output value (**high** ) | % Recirculation |
|---|---|---|
| TOC | More than 40% off from the historical average value (over last week or month) | ~50% |
| DOC | | |
| SUVA | | |
| Bromide | | |
| Ammonium | | |
| Specifically targeted pollutants | | |

As can be seen in Table 2, when the measured parameters have a medium relative difference from the average value over a certain time, the % recirculation will also be lower. However, as shown in Table 3, when the measured parameters deviate more than 40% from the historical average, recirculation can be set higher as this would indicate an undesired event such as the temporal presence of high disinfectant concentrations in the feed water. During such events, the outflow of treated water from the BAF proceeds to the OT, and while the OT can keep up the micropollutant removal, it allows the BAF to recover. However, if the process involves such an incidental undesired event, the OT-water is subsequently recirculated to the BAF-OT process again, thus allowing for at least another BAF step (and thus a set of consecutive BAF and OT steps).

In this manner, the system can be controlled based on these parameters and the desired % of recirculation can be adjusted based on these values.

## Claims

1. A process for the removal of organic micropollutants from water, comprising subjecting the water to a consecutive combination of biological adsorbent filtration (BAF) followed by oxidation treatment (OT), preferably ozone treatment, wherein BAF is the first micropollutant removal step,
wherein the BAF is a reactor which is provided with a biological adsorbent filter in the form of a bed of adsorbent carrier material upon which microorganisms adhere which degrade the organic micropollutants in the polluted water, wherein the reactor is filled with the adsorbent carrier material to a content of the total reactor volume ranging between 50 - 80%, and wherein the polluted water is led through the bed of adsorbent carrier material, wherein the BAF comprises granular activated carbon (GAC) carrier material which can both adsorb organic micropollutants and provide a surface for microorganisms to grow,
wherein the consecutive biological adsorbent filtration (BAF) and oxidation treatment (OT) are preceded by a water or wastewater purification process.

2. The process according to claim 1, wherein an adjustable amount of the OT effluent, preferably an adjustable amount preferably ranging between 10 - 100%, more preferably 20 - 90%, more preferably 20 - 80%, most preferably 20 - 50% of the OT effluent, is recirculated to the BAF.

3. The process according to claim 1 or 2, comprising monitoring the formation of oxidation products at the end of the OT and/or monitoring total organic carbon (TOC), dissolved organic carbon (DOC), specific UV absorbance (SUVA), bromide, ammonium, and/or other quality parameters and/or specifically targeted micropollutants in or at the end of the BAF, and controlling the amount of BAF-OT treated water which is recirculated to the consecutive steps of BAF and OT based on the output of the monitoring step.

4. The process according to any of the preceding claims, wherein the oxidant in the OT is Cl₂, CIO, ClO, ClO₃, H₂O₂, Fenton, ferrate, ozone, or combinations thereof, and wherein OT more preferably involves or is ozone treatment, and wherein the oxygen-rich off-gas of the OT is preferably provided to the BAF.

5. The process according to any of the preceding claims, wherein the oxygen concentration in the feed of the BAF is in the range of 3-25 g/m3, and is preferably in the range of 5 - 22 g/m3, such as is in the range of 7 - 20 g/m3, and wherein the oxygen is provided by any suitable means to the feed of the BAF and/or in the BAF.

6. The process according to any of the preceding claims wherein the hydraulic retention time of the water flow in the BAF is between 5 and 180 minutes, preferably between 10 and 120 minutes, such as between 30 and 60 minutes; and/or wherein the hydraulic retention time and superficial flow velocity in the BAF are adjustable by means of changing the inlet water flow of the BAF by a buffer prior to the BAF.

7. The process according to any of the preceding claims, wherein the superficial flow velocity of the water in the BAF, measured at the inlet of BAF, is between 0.1 and 40 m/h, preferably between 0.5 and 20 m/h, such as between 1 and 10 m/h.

8. The process according to any of the preceding claims, wherein the BAF is forward- and/or backwashed and/or washed in any other direction, by means of water, air or any other suitable material.

9. The process according to any of the preceding claims, wherein an adjustable amount of the flow of the BAF ranging between 10 - 100% of the outflow of the BAF is fed to the OT.

10. The process according to any of the preceding claims, wherein OT involves or is ozone treatment, wherein the applied specific ozone dose is between 0.05 and 2.0 g O₃/g DOC, preferably between 0.1 and 1.5 g O₃/g DOC, such as between 0.2 and 1.0 g O₃/g DOC, and/or between 0.05 and 2 g O₃/g TOC, preferably between 0.1 and 1.5 g O_{3/}g TOC, such as between 0.2 and 1 g O₃/g TOC.

11. The process according to any of the preceding claims wherein the preceding water or wastewater purification process comprises treatment with activated sludge, aerobic granular sludge, moving bed bioreactor (MBBR), integrated fixed film activate sludge (IFAS) and/or chemical/physical treatment like clarification, flocculation, filtration, precipitation.

12. An installation suitable for the process according to any one of the preceding claims, comprising one or more BAF reactors (5) in parallel and/or in series, and one or more OT reactors (11) in parallel and/or in series, and wherein the last BAF reactor or last set of parallel BAF reactors has a fluid connection with the first OT reactor or first set of parallel OT reactors, wherein the BAF reactor(s) is(are) provided with a water inlet and an inlet for oxygen, wherein the BAF reactor(s) is provided with a biological adsorbent filter comprising a filter bed, wherein the filter bed contains granular activated carbon (GAC) which can both adsorb micropollutants and provide a surface for microorganisms to grow, wherein the BAF reactor is filled with the GAC to a content of the total reactor volume ranging between 50 - 80%, and the BAF reactor(s) is further provided with a water (overflow) outlet to the OT or to the next BAF reactor in series, and optionally connections for a washing unit 15a, and wherein the OT reactor(s) is(are) provided with a water inlet from the BAF reactor(s) outlet, a water (overflow) outlet, and an inlet for the oxidant and an outlet for the off-gas.

13. The installation according to claim 12, wherein the OT reactor(s) is(are) provided with an outlet which is in fluid connection with the BAF(s) reactor(s) and equipped controlling means for adjusting the amount of the OT effluent 14 that is recirculated to the BAF reactor(s), and wherein the installation is preferably equipped with one or more sensoring devices, such as sensors for flow, oxygen, TOC, DOC, SUVA, pressure and/or ammonium, bromide and/or specifically targeted pollutants at the water inlet and/or outlet of the BAF and/or is equipped with level transmitters in the BAF.

14. The installation according to claim 12 or 13, wherein OT involves ozone treatment, and wherein the OT reactor(s) is(are) provided with an inlet for a gaseous ozone mixture, and wherein the outlet of the off-gas is in fluid connection to the inlet of oxygen into the BAF reactor(s).

15. The installation according to any one of claims 12 - 14, wherein the inlet of the one or more BAF reactors is connected to a wastewater treatment plant.

## Patentansprüche

1. Verfahren zur Entfernung organischer Mikroverunreinigungen aus Wasser, das das Unterziehen des Wassers einer aufeinanderfolgenden Kombination aus biologischer Adsorptionsfiltration (BAF) und anschließender Oxidationsbehandlung (OT), vorzugsweise einer Ozonbehandlung, umfasst, wobei die BAF der erste Schritt zur Entfernung von Mikroverunreinigungen ist,
wobei die BAF ein Reaktor ist, der mit einem biologischen Adsorptionsfilter in Form eines Bettes aus Adsorptionsträgermaterial versehen ist, an dem Mikroorganismen anhaften, die die organischen Mikroverunreinigungen in dem verschmutzten Wasser abbauen, wobei der Reaktor mit dem Adsorptionsträgermaterial bis zu einem Gehalt im Bereich von 50 - 80 % des gesamten Reaktorvolumens gefüllt ist und wobei das verschmutzte Wasser durch das Bett aus Adsorptionsträgermaterial geleitet wird, wobei die BAF granuliertes Aktivkohle(GAC)-Trägermaterial umfasst, das sowohl organische Mikroverunreinigungen absorbieren als auch eine Oberfläche für das Wachstum von Mikroorganismen bereitstellen kann,
wobei der aufeinanderfolgenden biologischen Adsorptionsfiltration (BAF) und Oxidationsbehandlung (OT) ein Wasser- oder Abwasserreinigungsprozess vorausgeht.

2. Verfahren nach Anspruch 1, wobei eine einstellbare Menge des OT-Abwassers, vorzugsweise eine einstellbare Menge im Bereich von 10 - 100 %, bevorzugter 20 - 90 %, noch bevorzugter 20 - 80 %, am bevorzugtesten 20 - 50 % des OT-Abwassers zu der BAF zurückgeführt wird.

3. Verfahren nach Anspruch 1 oder 2, das das Überwachen der Bildung von Oxidationsprodukten am Ende der OT und/oder das Überwachen des gesamten organischen Kohlenstoffs (TOC), des gelösten organischen Kohlenstoffs (DOC), der spezifischen UV-Absorption (SUVA), des Bromids, des Ammoniums und/oder anderer Qualitätsparameter und/oder spezifischer Mikroverunreinigungen in oder am Ende der BAF und das Steuern der Menge an BAF-OT-behandeltem Wasser, das zu den aufeinanderfolgenden Schritten der BAF und OT zurückgeführt wird, basierend auf dem Ergebnis des Überwachungsschritts umfasst.

4. Verfahren nach einem der vorhergehenden Ansprüche, wobei das Oxidationsmittel in der OT Cl₂, ClO, ClO, ClO₃, H₂O₂, Fenton, Ferrat, Ozon oder Kombinationen davon sind und wobei die OT vorzugsweise eine Ozonbehandlung beinhaltet oder ist und wobei das sauerstoffreiche Abgas der OT vorzugsweise der BAF zugeführt wird.

5. Verfahren nach einem der vorhergehenden Ansprüche, wobei die Sauerstoffkonzentration in dem Zulauf der BAF im Bereich von 3 - 25 g/m3 liegt und vorzugsweise im Bereich von 5 - 22 g/m3, beispielsweise im Bereich von 7 - 20 g/m3, liegt und wobei der Sauerstoff dem Zulauf der BAF und/oder in der BAF durch geeignete Mittel zugeführt wird.

6. Verfahren nach einem der vorhergehenden Ansprüche, wobei die hydraulische Retentionszeit des Wasserstroms in der BAF zwischen 5 und 180 Minuten liegt, vorzugsweise zwischen 10 und 120 Minuten, beispielsweise zwischen 30 und 60 Minuten; und/oder wobei die hydraulische Retentionszeit und die Oberflächenströmungsgeschwindigkeit in der BAF durch Ändern des Einlasswasserstroms der BAF durch einen Puffer vor der BAF einstellbar sind.

7. Verfahren nach einem der vorhergehenden Ansprüche, wobei die Oberflächenströmungsgeschwindigkeit des Wassers in der BAF, gemessen an dem Einlass der BAF, zwischen 0,1 und 40 m/h liegt, vorzugsweise zwischen 0,5 und 20 m/h, beispielsweise zwischen 1 und 10 m/h.

8. Verfahren nach einem der vorhergehenden Ansprüche, wobei die BAF durch Wasser, Luft oder einem anderen geeigneten Material vorwärts und/oder rückwärts gespült und/oder in einer anderen Richtung gespült wird.

9. Verfahren nach einem der vorhergehenden Ansprüche, wobei eine einstellbare Menge des BAF-Stroms im Bereich von 10 - 100 % des BAF-Abflusses der OT zugeführt wird.

10. Verfahren nach einem der vorhergehenden Ansprüche, wobei die OT eine Ozonbehandlung beinhaltet oder ist, wobei die angewandte spezifische Ozondosis zwischen 0,05 und 2,0 g O3/g DOC, vorzugsweise zwischen 0,1 und 1,5 g O3/g DOC, beispielsweise zwischen 0,2 und 1,0 g O3/g DOC, und/oder zwischen 0,05 und 2 g O3/g TOC, vorzugsweise zwischen 0,1 und 1,5 g O3/g TOC, beispielsweise zwischen 0,2 und 1 g O3/g TOC, liegt.

11. Verfahren nach einem der vorhergehenden Ansprüche, wobei das vorhergehende Wasser- oder Abwasserreinigungsverfahren die Behandlung mit Belebtschlamm, aerobem granuliertem Schlamm, einem Bioreaktor mit bewegtem Bett (MBBR), integriertem Festfilm-Belebtschlamm (IFAS) und/oder eine chemische/physikalische Behandlung wie Klärung, Flockung, Filtration, Ausfällung umfasst.

12. Installation, die für das Verfahren nach einem der vorhergehenden Ansprüche geeignet ist, die einen oder mehrere parallel und/oder in Reihe geschaltete BAF-Reaktoren (5) und einen oder mehrere parallel und/oder in Reihe geschaltete OT-Reaktoren (11) umfasst, und wobei der letzte BAF-Reaktor oder der letzte Satz paralleler BAF-Reaktoren eine Fluidverbindung mit dem ersten OT-Reaktor oder dem ersten Satz paralleler OT-Reaktoren aufweist, wobei der/die BAF-Reaktor(en) mit einem Wassereinlass und einem Einlass für Sauerstoff versehen ist (sind), wobei der/die BAF-Reaktor(en) mit einem biologischen Adsorptionsfilter versehen ist (sind), der ein Filterbett umfasst, wobei das Filterbett granulierte Aktivkohle (GAC) enthält, die sowohl Mikroverunreinigungen adsorbieren als auch eine Oberfläche für das Wachstum von Mikroorganismen bereitstellen kann, wobei der BAF-Reaktor mit der GAC bis zu einem Gehalt im Bereich von 50 - 80 % des gesamten Reaktorvolumens gefüllt ist und der/die BAF-Reaktor(en) ferner mit einem Wasser(Überlauf)-Auslass zu der OT oder dem nächsten in Reihe geschalteten BAF-Reaktor und optional den Anschlüssen für eine Wascheinheit 15a versehen ist (sind) und wobei der/die OT-Reaktor(en) mit einem Wassereinlass von dem Auslass des/der BAF-Reaktor(en), einem Wasser(Überlauf)-Auslass und einem Einlass für das Oxidationsmittel und einem Auslass für das Abgas versehen ist (sind).

13. Installation nach Anspruch 12, wobei der/die OT-Reaktor(en) mit einem Auslass versehen ist (sind), der in Fluidverbindung mit dem/den BAF-Reaktor(en) steht, und mit Steuerungsmitteln zum Einstellen der Menge des OT-Abwassers 14 ausgestattet ist (sind), das zu dem/den BAF-Reaktor(en) zurückgeführt wird, und wobei die Installation vorzugsweise mit einem oder mehreren Sensor-Vorrichtungen ausgestattet ist, wie beispielsweise Sensoren für Durchfluss, Sauerstoff, TOC, DOC, SUVA, Druck und/oder Ammonium, Bromid und/oder spezifische Schadstoffe an dem Wassereinlass und/oder -auslass der BAF und/oder mit Füllstandsmessumformern in der BAF ausgestattet ist.

14. Installation nach Anspruch 12 oder 13, wobei die OT eine Ozonbehandlung beinhaltet und wobei der/die OT-Reaktor(en) mit einem Einlass für eine gasförmige Ozonmischung versehen ist (sind) und wobei der Auslass des Abgases in Fluidverbindung mit dem Sauerstoffeinlass in den/die BAF-Reaktor(en) steht.

15. Installation nach einem der vorhergehenden Ansprüche 12 - 14, wobei der Einlass des einen oder der mehreren BAF-Reaktoren mit einer Abwasserbehandlungsanlage verbunden ist.

## Revendications

1. Procédé pour l'élimination de micropolluants organiques de l'eau, comprenant les étapes consistant à soumettre l'eau à une combinaison consécutive de filtration par adsorbant biologique (BAF) suivie d'un traitement par oxydation (OT), de préférence un traitement à l'ozone, où la BAF est la première étape d'élimination de micropolluants,
où la BAF est un réacteur qui est pourvu d'un filtre adsorbant biologique sous la forme d'un lit de matériau support adsorbant sur lequel adhèrent des micro-organismes qui dégradent les micropolluants organiques dans l'eau polluée, où le réacteur est rempli avec le matériau support adsorbant jusqu'à une teneur du volume total du réacteur comprise entre 50 et 80 %, et où l'eau polluée est conduite à travers le lit de matériau support adsorbant, où la BAF comprend un matériau support à charbon actif granulaire (GAC) qui peut à la fois adsorber des micropolluants organiques et fournir une surface pour la croissance des micro-organismes,
où la filtration adsorbante biologique (BAF) et le traitement par oxydation (OT) consécutifs sont précédés d'un procédé de purification de l'eau ou des eaux usées.

2. Procédé selon la revendication 1, où une quantité réglable de l'effluent OT, de préférence une quantité réglable comprise de préférence entre 10 et 100 %, plus préférablement entre 20 et 90 %, plus préférablement entre 20 et 80 %, et encore plus préférablement entre 20 et 50 % de l'effluent OT, est recyclée vers la BAF.

3. Procédé selon la revendication 1 ou 2, comprenant la surveillance de la formation de produits d'oxydation à la fin de l'OT et/ou la surveillance du carbone organique total (COT), du carbone organique dissous (COD), de l'absorbance spécifique aux UV (SUVA), du bromure, de l'ammonium et/ou d'autres paramètres de qualité et/ou de micropolluants spécifiquement ciblés dans ou à la fin de la BAF, et contrôler la quantité d'eau traitée par BAF-OT qui est recyclée vers les étapes consécutives de la BAF et de l'OT en fonction du résultat de l'étape de surveillance.

4. Procédé selon l'une quelconque des revendications précédentes, où l'oxydant dans l'OT est Cl₂, ClO, ClO, ClO₃, H₂O₂, Fenton, ferrate, ozone ou des combinaisons de ceux-ci, et où l'OT implique plus préférablement ou est un traitement à l'ozone, et où le gaz émis riche en oxygène de l'OT est de préférence fourni à la BAF.

5. Procédé selon l'une quelconque des revendications précédentes, où la concentration en oxygène dans l'alimentation de la BAF est comprise entre 3 et 25 g/m³, et est de préférence comprise entre 5 et 22 g/m³, telle que comprise entre 7 et 20 g/m³, et où l'oxygène est fourni par tout moyen adapté à l'alimentation de la BAF et/ou dans la BAF.

6. Procédé selon l'une quelconque des revendications précédentes, où le temps de rétention hydraulique du débit d'eau dans la BAF est entre 5 et 180 minutes, de préférence entre 10 et 120 minutes, tel qu'entre 30 et 60 minutes ; et/ou où le temps de rétention hydraulique et la vitesse d'écoulement superficielle dans la BAF sont réglables en modifiant le débit d'eau d'entrée de la BAF à l'aide d'un tampon avant la BAF.

7. Procédé selon l'une quelconque des revendications précédentes, où la vitesse d'écoulement superficielle de l'eau dans la BAF, mesurée à l'entrée de la BAF, est entre 0,1 et 40 m/h, de préférence entre 0,5 et 20 m/h, telle qu'entre 1 et 10 m/h.

8. Procédé selon l'une quelconque des revendications précédentes, où la BAF est lavée à l'avant et/ou à contre-courant et/ou lavée dans toute autre direction, au moyen d'eau, d'air ou de tout autre matériau adapté.

9. Procédé selon l'une quelconque des revendications précédentes, où une quantité réglable du débit de la BAF comprise entre 10 et 100 % du débit sortant de la BAF est alimentée vers l'OT.

10. Procédé selon l'une quelconque des revendications précédentes, où l'OT implique ou est un traitement à l'ozone, où la dose spécifique d'ozone appliquée est entre 0,05 et 2,0 g O₃/g COD, de préférence entre 0,1 et 1,5 g O₃/g COD, telle qu'entre 0,2 et 1,0 g O₃/g COD, et/ou entre 0,05 et 2 g O₃/g COT, de préférence entre 0,1 et 1,5 g O₃/g COT, telle qu'entre 0,2 et 1 g O₃/g COT.

11. Procédé selon l'une quelconque des revendications précédentes, où le procédé de purification de l'eau ou des eaux usées comprend un traitement avec des boues activées, des boues granulaires aérobies, un bioréacteur à lit mobile (MBBR), des boues activées à film fixe intégré (IFAS) et/ou un traitement chimique/physique tel que la clarification, la floculation, la filtration, la précipitation.

12. Installation adaptée au procédé selon l'une quelconque des revendications précédentes, comprenant un ou plusieurs réacteurs BAF (5) en parallèle et/ou en série, et un ou plusieurs réacteurs OT (11) en parallèle et/ou en série, et où le dernier réacteur BAF ou le dernier ensemble de réacteurs BAF en parallèle présente une connexion fluide avec le premier réacteur OT ou avec le premier ensemble de réacteurs OT en parallèle, où le(s) réacteur(s) BAF est(sont) pourvu(s) d'une entrée d'eau et d'une entrée pour l'oxygène, où le(s) réacteur(s) BAF est(sont) pourvu(s) d'un filtre adsorbant biologique comprenant un lit filtrant, où le lit filtrant contient du charbon actif granulaire (GAC) qui peut à la fois adsorber des micropolluants et fournir une surface pour la croissance de micro-organismes, où le réacteur BAF est rempli avec le GAC jusqu'à une teneur du volume total du réacteur comprise entre 50 et 80 %, et le(s) réacteur(s) BAF est(sont) en outre pourvu(s) d'une sortie d'eau (eaux excédentaires) vers l'OT ou vers le réacteur BAF en série suivant, et éventuellement des connexions pour une unité de lavage 15a, et où le(s) réacteur(s) OT est(sont) équipé(s) d'une entrée d'eau provenant de la sortie du(des) réacteur(s) BAF, d'une sortie d'eau (eaux excédentaires), d'une entrée pour l'oxydant et d'une sortie pour les gaz émis.

13. Installation selon la revendication 12, où le(s) réacteur(s) OT est(sont) pourvu(s) d'une sortie qui est en communication fluidique avec le(s) réacteur(s) BAF et équipés de moyens de commande pour ajuster la quantité d'effluent OT 14 qui est recyclée vers le(s) réacteur(s) BAF, et où l'installation est de préférence équipée d'un ou plusieurs dispositifs de détection, tels que des capteurs de débit, d'oxygène, de COT, de DOC, de SUVA, de pression et/ou d'ammonium, de bromure et/ou de polluants spécifiquement ciblés à l'entrée et/ou à la sortie d'eau de la BAF et/ou est équipée de transmetteurs de niveau dans la BAF.

14. Installation selon la revendication 12 ou 13, où l'OT implique un traitement à l'ozone, et où le(s) réacteur(s) OT est(sont) pourvu(s) d'une entrée pour un mélange gazeux d'ozone, et où la sortie du gaz émis est en communication fluidique avec l'entrée d'oxygène dans le(s) réacteur(s) BAF.

15. Installation selon l'une quelconque des revendications 12 à 14, où l'entrée de l'un ou plusieurs réacteurs BAF est reliée à une station de traitement des eaux usées.
